# EUROPÄISCHE PATENTSCHRIFT

(11) **EP 0 588 153 B1**
(45) Veröffentlichungstag und Bekanntmachung des Hinweises auf die Patenterteilung: **27.12.1996**
(21) Anmeldenummer: 93113978.6
(22) Anmeldetag: 01.09.1993
(51) Int. Cl.: G01N 27/416

(54) **Gassensor**
Gas sensor
Capteur de gaz

(30) Priorität: 14.09.1992 DE 4230690
(43) Veröffentlichungstag der Anmeldung: 23.03.1994
(73) Patentinhaber: SIEMENS AKTIENGESELLSCHAFT, 80333 München (DE)
(72) Erfinder: Gumbrecht, Walter, Dr., D-91074 Herzogenaurach (DE); Schelter, Wolfgang, Dr., D-91080 Uttenreuth (DE); Lang, Siegrun, D-91058 Erlangen (DE)

(56) Entgegenhaltungen:
- WO-A-91/11710
- DE-A- 2 009 937
- SENSORS AND ACTUATORS B Bd. 2 , 8. Juli 1990 Seiten 291 - 295 XP163052 K.TSUKADA, Y. MIYAHARA ET AL. 'An Integrated Chemical Sensor with Multiple Ion and Gas Sensors'

## Beschreibung

Die Erfindung betrifft einen planaren Gassensor, insbesondere einen pCO₂- oder pO₂-Sensor.

Der Partialdruck von Kohlendioxid (pCO₂) in wäßrigen Medien, beispielsweise im Blut, wird üblicherweise nach dem sogenannten Severinghausprinzip bestimmt, d.h. mittels eines Sensors auf der Basis einer pH-sensitiven Glaselektrode (siehe dazu: W. Göpel, J. Hesse und J. N. Zemel (Herausgeber), "Sensors: A Comprehensive Survey", Vol. 2 ("Chemical and Biochemical Sensors"), VCH Verlagsgesellschaft mbH, Weinheim 1991, Seiten 488 und 489). Der pH-Sensor befindet sich dabei - in Kombination mit einer Ag/AgCl-Referenzelektrode - in einer ungepufferten NaCl/NaHCO₃-Lösung. Diese Anordnung ist zur Meßlösung hin mit einer Membran aus hydrophobem Material, wie Silicongummi, isoliert. Kohlendioxid kann - im Gegensatz zu Ionen - durch diese Membran diffundieren und den pH-Wert der Innenlösung gemäß der Gleichung 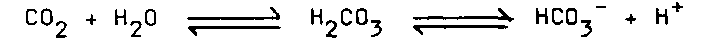 ändern. Da die Cl⁻-Konzentration der Innenlösung dabei konstant bleibt, liefert die Ag/AgCl-Elektrode ein konstantes Referenzpotential (siehe dazu beispielsweise: K. Cammann, "Das Arbeiten mit ionenselektiven Elektroden", 2. Auflage, Springer-Verlag Berlin, Heidelberg 1977, Seiten 95 und 96).

Es wurde bereits versucht, das Severinghausprinzip in planartechnologische Anordnungen mit pH-sensitiven FETs (Field Effect Transistors) überzuführen; keine dieser Anordnungen konnte bislang aber zur Fertigungsreife geführt werden. So ist ein pCO₂-Sensor des Severinghaustyps in Form einer Katheterspitze bekannt (siehe: "Med. & Biol. Eng. & Comput.", Vol. 18 (1980), Seiten 741 bis 745). Dazu befindet sich ein pH-ISFET, d.h. ein pH-sensitiver ISFET (Ion-Sensitive Field Effect Transistor), an der Spitze eines dünnen Nylonröhrchens, zusammen mit einer Ag/AgCl-Elektrode. Bei einem anderen auf dem Severinghausprinzip basierenden CO₂-Sensor ist ein pH-ISFET mit einer temperaturempfindlichen Diode auf einem Chip kombiniert (siehe: "Sensors and Actuators", Vol. 17 (1989), Seiten 275 bis 278). Dieser Sensor weist einen Ag/AgCl-Draht als Referenzelektrode auf, der nicht auf dem Chip integriert ist (Hybridanordnung).

Es ist auch bereits ein integrierter chemischer Sensor mit mehreren auf einem Chip angeordneten Ionen- und Gassensoren bekannt, der einen pCO₂-Sensor des Severinghaustyps aufweist (siehe: "Sensors and Actuators B", Vol. 2 (1990), Seiten 291 bis 295). Der pCO₂-Sensor weist einen ISFET (mit einem Si₃N₄-Gate) als inneren pH-Sensor und eine Ag/AgCl-Referenzelektrode auf, wobei pH-ISFET und Referenzelektrode von einem Mikropool aus Polyimid umgeben sind. In diesem Mikropool befindet sich ein Elektrolytgel aus Polyvinylalkohol, NaCl und NaHCO₃. Das Elektrolytgel ist mit einer gasdurchlässigen Membran aus Silicongummi mit einer Dicke von 50 bis 100 µm bedeckt. Bei der Inbetriebnahme des Sensors nimmt die Elektrolytschicht Wasserdampf auf und quillt, wodurch die darüberliegende Silikonmembran mechanisch belastet wird. Da diese Membran jedoch nur am Rand (Dicke: wenige µm) mit der Wand des Polyimid-Mikropools verbunden ist, ist eine dauerhafte Abdichtung und Abdeckung des Elektrolyts nicht gewährleistet.

Aufgabe der Erfindung ist es, einen planaren Gassensor anzugeben, insbesondere einen pCO₂- oder pO₂-Sensor, bei dem eine dauerhafte Funktionsfähigkeit gewährleistet ist und der in Serie gefertigt werden kann.

Dies wird erfindungsgemäß durch einen Gassensor erreicht, der folgende Merkmale aufweist:
- einen auf einem planen Substrat befindlichen pH-Sensor oder wenigstens eine auf dem Substrat befindliche Edelmetallelektrode,
- eine dem pH-Sensor bzw. der Edelmetallelektrode benachbarte Referenzelektrode,
- eine die Referenzelektrode und den pH-Sensor bzw. die Edelmetallelektrode abdeckende Elektrolytschicht, die von einer ersten Polymerstruktur begrenzt ist, und
- eine die Elektrolytschicht sowie einen Oberflächenbereich des Substrats außerhalb der ersten Polymerstruktur bedeckende Schicht aus hydrophobem Material, die von einer zweiten Polymerstruktur begrenzt ist.

Dem erfindungsgemäßen Gassensor liegt entweder ein pH-Sensor oder wenigstens eine Edelmetallelektrode zugrunde, jeweils in Kombination mit einer Referenzelektrode. Im Falle eines pH-Sensors dient der Gassensor zur Bestimmung von Kohlendioxid und ähnlicher Gase, im Falle einer Edelmetallelektrode zur Bestimmung von Sauerstoff. Der pH-Sensor kann eine pH-sensitive Elektrode sein, beispielsweise eine IrO₂-Elektrode, die auf einem isolierenden Substrat, wie Aluminiumoxid oder Quarz, angeordnet ist. Vorzugsweise ist der pH-Sensor ein pH-ISFET, der sich auf einem Halbleitersubstrat, wie Silicium, befindet. Die Edelmetallelektrode besteht vorzugsweise aus Platin. Ist nur eine Edelmetallelektrode vorhanden, dann dient die Referenzelektrode gleichzeitig als Gegenelektrode; ansonsten wird als Gegenelektrode eine zweite Edelmetallelektrode eingesetzt. Die Edelmetallelektroden sind als Dünnfilm ausgestaltet.

Als Referenzelektrode, die auf einem isolierenden Substrat angeordnet ist, dient vorzugsweise eine Ag/AgCl-Elektrode, die beispielsweise in monolithischem Aufbau hergestellt wird. Bei einem pO₂-Sensor ist die Referenzelektrode sogar ausschließlich eine Ag/AgCl-Elektrode. Bei einem pCO₂-Sensor und bei Sensoren für ähnliche Gase wie Kohlendioxid kann die Referenzelektrode auch eine plane Edelmetallelektrode sein, insbesondere aus Platin; eine derartige Referenzelektrode ist redoxempfindlich.

Auf der Anordnung aus pH-Sensor bzw. Edelmetallelektrode und Referenzelektrode befindet sich eine Elektrolytschicht, die durch eine erste Polymerstruktur begrenzt wird. Dies ist beispielsweise ein Ring aus polymerem Material, der pH-Sensor bzw. Edelmetallelektrode und Referenzelektrode umgibt. Dieser Ring wird durch Strukturierung einer Schicht aus dem Polymermaterial hergestellt. Dabei wird ein sogenannter Innenpool gebildet, der beispielsweise einen Durchmesser von ca. 350 µm aufweist; dieser Innenpool wird dann mit Elektrolyt gefüllt. In entsprechender Weise wird - durch Strukturierung einer Schicht aus polymerem Material - eine zweite Polymerstruktur erzeugt, die die erste Struktur umgibt. Auf diese Weise wird ein sogenannter Außenpool gebildet, der beispielsweise einen Durchmesser von ca. 600 µm aufweist. Dieser Außenpool wird mit einer Lösung eines hydrophoben Materials gefüllt, und auf diese Weise wird eine Schicht aus hydrophobem Material erhalten, welche die Elektrolytschicht flüssigkeitsdicht abdeckt.

Die Schicht aus hydrophobem Material bedeckt aber nicht nur die Elektrolytschicht, d.h. die Anordnung aus pH-Sensor bzw. Edelmetallelektrode und Referenzelektrode, einschließlich der ersten Polymerstruktur, sondern auch den zwischen den beiden Polymerstrukturen liegenden Oberflächenbereich des Substrats. Dabei wird die hydrophobe Membran fest mit der Substratoberfläche verankert, und zwar über einen größeren Bereich, im allgemeinen > 100 µm (entsprechend dem Abstand zwischen den beiden Polymerstrukturen). Auf diese Weise wird eine sehr gute Abdichtung des Elektrolyts gewährleistet. Dies ist insbesondere dann der Fall, wenn ein Siliciumsubstrat verwendet wird, das mit einer dünnen SiO₂-Schicht bedeckt ist, und die hydrophobe Membran aus Polysiloxan besteht, weil Polysiloxan sehr gut auf SiO₂ haftet.

Die erste Polymerstruktur weist vorzugsweise eine Höhe von 1 bis 10 µm auf, sie kann aber auch höher sein, und zwar insbesondere bis zu 30 µm hoch; die zweite Polymerstruktur weist vorzugsweise eine Höhe von 10 bis 30 µm auf, im allgemeinen ist sie etwa 30 µm hoch. Die Breite der ersten Polymerstruktur beträgt vorzugsweise 10 bis 50 µm und der Abstand zwischen der ersten und der zweiten Polymerstruktur vorzugsweise 50 bis 200 µm. Die Polymerstrukturen sind insbesondere kreisförmig ausgebildet, sie können beispielsweise aber auch eine quadratische oder rechteckige Form aufweisen. Als Material für die beiden Polymerstrukturen dient vorzugsweise Polyimid. Daneben kommen aber auch andere strukturierbare Polymermaterialien in Frage, wie Polybenzoxazol.

Die Elektrolytschicht enthält im allgemeinen ein Hydrogel. Als Hydrogel dient vorzugsweise Polyvinylpyrrolidon (PVP), daneben kommen auch andere hydrophile Polymere in Betracht, wie Polyvinylalkohol (PVA) und polymeres 2-Hydroxyethylmethacrylat (pHEMA). Im Falle eines pCO₂-Sensors enthält die Elektrolytschicht zusätzlich ein Hydrogencarbonat, insbesondere Natriumhydrogencarbonat. Wenn als Referenzelektrode eine Ag/AgCl-Elektrode vorhanden ist, dann weist der Elektrolyt ein Chlorid auf, insbesondere Kaliumchlorid, im Falle einer Edelmetallelektrode ein Redox-Puffersystem wie Fe²⁺/Fe³⁺, insbesondere in Form von K₄[Fe(CN)₆]/K₃[Fe(CN)₆].

Die Schicht aus hydrophobem Material besteht vorzugsweise aus Polysiloxan in Form von Silicon bzw. Silicongummi. Dieses Material hat den Vorteil, daß es sehr gut auf Materialien wie SiO₂ und Si₃N₄ haftet, so daß gewährleistet ist, daß der im Betriebszustand des Gassensors gequollene oder flüssige Elektrolyt dauerhaft eingeschlossen und abgedichtet wird.

Der Gassensor nach der Erfindung gelangt im allgemeinen bei wäßrigen Medien zum Einsatz, er kann aber auch zur Untersuchung feuchter Gasströme dienen. Außer als pO₂-Sensor wird der erfindungsgemäße Gassensor vorzugsweise als pCO₂-Sensor eingesetzt, d.h. zur Bestimmung von Kohlendioxid. Da ein derartiger Gassensor einen pH-Sensor aufweist, können damit prinzipiell aber alle Gase bestimmt werden, bei denen beim Einleiten in wäßrige Lösungen Wasserstoffionen entstehen oder abgefangen werden, d.h. die im Elektrolyt eine Änderung des pH-Wertes bewirken. Zu derartigen Gasen gehören - neben Kohlendioxid (CO₂) - insbesondere Ammoniak (NH₃), Schwefeldioxid (SO₂), Stickstoffdioxid (NO₂), Fluorwasserstoff (HF), Schwefelwasserstoff (H₂S) und Blausäure bzw. Cyanwasserstoff (HCN).

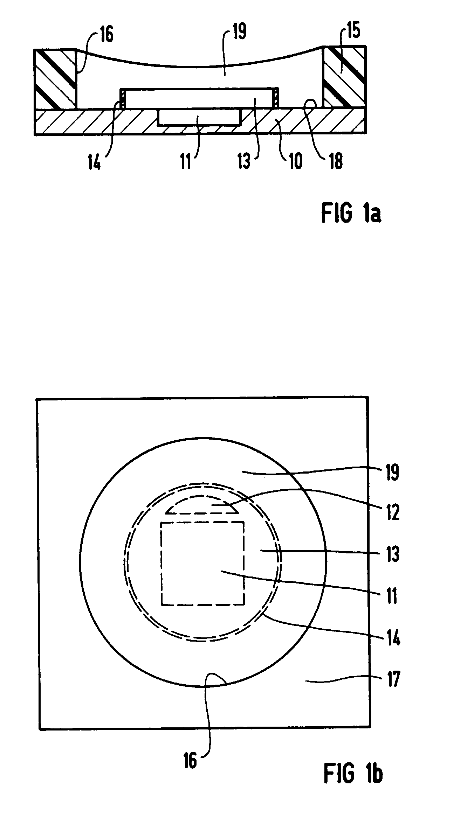

Anhand einer Figur soll die Erfindung noch näher erläutert werden. In der Figur ist - im Schnitt (a) und in Draufsicht (b) - eine Ausführungsform des planaren Gassensors nach der Erfindung dargestellt.

Auf einem planen Substrat 10, insbesondere einem Siliciumsubstrat, ist ein pH-Sensor 11, insbesondere ein pH-ISFET, angeordnet, dem eine Referenzelektrode 12 benachbart ist. Der pH-Sensor 11 und die Referenzelektrode 12 sind durch eine Elektrolytschicht 13 abgedeckt, die durch eine ringförmige Polymerstruktur 14 begrenzt wird, d.h. die Elektrolytschicht 13 befindet sich im Raum innerhalb der Polymerstruktur 14. Die ringförmige Polymerstruktur 14 ist von einer zweiten Polymerstruktur 15 in Form einer ein Loch 16 aufweisenden Polymerschicht 17 umgeben. Der Raum innerhalb der Polymerstruktur 15 ist mit einem hydrophoben Material gefüllt, d.h. die Elektrolytschicht 13 und ein Oberflächenbereich 18 des Substrats 10, der sich außerhalb der Polymerstruktur 14 befindet, sind mit einer Schicht 19 aus hydrophobem Material bedeckt. Diese Schicht 19 wird somit von der Polymerstruktur 15 begrenzt.

## Patentansprüche

1. Planarer Gassensor, insbesondere pCO₂- oder pO₂-Sensor, dessen Aufbau durch folgende Merkmale bestimmt ist:
- einen auf einem planen Substrat befindlichen pH-Sensor oder wenigstens eine auf dem Substrat befindliche Edelmetallelektrode,
- eine dem pH-Sensor bzw. der Edelmetallelektrode benachbarte Referenzelektrode,
- eine die Referenzelektrode und den pH-Sensor bzw. die Edelmetallelektrode abdeckende Elektrolytschicht, die von einer ersten Polymerstruktur begrenzt ist, und
- eine die Elektrolytschicht sowie einen Oberflächenbereich des Substrats außerhalb der ersten Polymerstruktur bedeckende Schicht aus hydrophobem Material, die von einer zweiten Polymerstruktur begrenzt ist.

2. Gassensor nach Anspruch 1, **dadurch gekennzeichnet**, daß der pH-Sensor ein pH-ISFET ist.

3. Gassensor nach Anspruch 1 oder 2, **dadurch gekennzeichnet**, daß die erste Polymerstruktur eine Höhe von 1 bis 10 µm und die zweite Polymerstruktur eine Höhe von 10 bis 30 µm aufweist.

4. Gassensor nach einem der Ansprüche 1 bis 3, **dadurch gekennzeichnet**, daß die erste Polymerstruktur eine Breite von 10 bis 50 µm aufweist, und daß der Abstand zwischen der ersten und der zweiten Polymerstruktur 50 bis 200 µm beträgt.

5. Gassensor nach einem oder mehreren der Ansprüche 1 bis 4, **dadurch gekennzeichnet**, daß die erste und die zweite Polymerstruktur aus Polyimid bestehen.

6. Gassensor nach einem oder mehreren der Ansprüche 1 bis 5, **dadurch gekennzeichnet**, daß die Elektrolytschicht ein Hydrogel enthält.

7. Gassensor nach Anspruch 6, **dadurch gekennzeichnet**, daß das Hydrogel Polyvinylpyrrolidon ist.

8. Gassensor nach Anspruch 6 oder 7, **dadurch gekennzeichnet**, daß das Hydrogel ein Hydrogencarbonat enthält.

9. Gassensor nach einem oder mehreren der Ansprüche 1 bis 8, **dadurch gekennzeichnet**, daß die Schicht aus hydrophobem Material aus Polysiloxan besteht.

10. Gassensor nach einem oder mehreren der Ansprüche 1 bis 9, **dadurch gekennzeichnet**, daß die Referenzelektrode eine Ag/AgCl-Elektrode ist.

## Claims

1. Planar gas sensor, in particular a pCO₂ or pO₂ sensor, the structure of which is determined by the following features:
- a pH-sensor located on a flat substrate or at least one noble metal electrode located on the substrate,
- a reference electrode adjacent to the pH-sensor or the noble metal electrode,
- an electrolyte layer covering the reference electrode and the pH-sensor or the noble metal electrode, which layer is bordered by a first polymer structure, and
- a layer of hydrophobic material covering the electrolyte layer and a surface area of the substrate outside the first polymer structure, which layer of hydrophobic material is bordered by a second polymer structure.

2. Gas sensor according to claim 1, characterized in that the pH-sensor is a pH-ISFET.

3. Gas sensor according to claim 1 or 2, characterized in that the first polymer structure has a height of 1 to 10 µm and the second polymer structure has a height of 10 to 30 µm.

4. Gas sensor according to one of claims 1 to 3, characterized in that the first polymer structure has a width of 10 to 50 µm, and that the distance between the first and the second polymer structure amounts to 50 to 200 µm.

5. Gas sensor according to one or more of claims 1 to 4, characterized in that the first and the second polymer structure consist of polyimide.

6. Gas sensor according to one or more of claims 1 to 5, characterized in that the electrolyte layer contains a hydrogel.

7. Gas sensor according to claim 6, characterized in that the hydrogel is polyvinyl pyrrolidone.

8. Gas sensor according to claim 6 or 7, characterized in that the hydrogel contains a hydrogen carbonate.

9. Gas sensor according to one or more of claims 1 to 8, characterized in that the layer of hydrophobic material consists of polysiloxane.

10. Gas sensor according to one or more of claims 1 to 9, characterized in that the reference electrode is an Ag/AgCl electrode.

## Revendications

1. Capteur de gaz planaire, notamment capteur pCO₂ ou pO₂, dont la structure est définie par les caractéristiques ci-après:
- un capteur pH se trouvant sur un substrat plan ou au moins une électrode en métal précieux se trouvant sur le substrat.
- une électrode de référence contigue au capteur pH ou à l'électrode en métal précieux,
- une couche d'électrolyte limitée par un premier polymère, recouvrant l'électrode de référence et le capteur pH ou l'électrode en métal précieux et
- une couche en matière hydrophobe limitée par un deuxième polymère, recouvrant la couche d'électrolyte ainsi qu'une zone de la surface du substrat hors du premier polymère.

2. Capteur de gaz selon la revendication 1 **caractérisé en ce que** le capteur pH est un pH-ISFET.

3. Capteur de gaz selon la revendication 1 ou 2 **caractérisé en ce que** le premier polymère présente une épaisseur de 1 à 10 µm et le deuxième polymère une épaisseur de 10 à 30 µm.

4. Capteur de gaz selon l'une des revendications 1 à 3 **caractérisé en ce que** le premier polymère présente une largeur de 10 à 50 µm et en ce que l'écartement entre le premier et le deuxième polymère est de 50 à 200 µm.

5. Capteur de gaz selon l'une ou plusieurs des revendications 1 à 4 **caractérisé en ce que** le premier et le deuxième polymère sont en polyimide.

6. Capteur de gaz selon l'une ou plusieurs des revendications 1 à 5 **caractérisé en ce que** la couche d'électrolyte contient un hydrogel.

7. Capteur de gaz selon la revendication 6 **caractérisé en ce que** l'hydrogel est le polyvinylpyrrolidone.

8. Capteur de gaz selon la revendication 6 ou 7 **caractérisé en ce que** l'hydrogel contient un hydrogénocarbonate.

9. Capteur de gaz selon l'une ou plusieurs des revendications 1 à 8 **caractérisé en ce que** la couche en matière hydrophobe est en polysiloxane.

10. Capteur de gaz selon l'une ou plusieurs des revendications 1 à 9 **caractérisé en ce que** l'électrode de référence est une électrode Ag/AgCl.
